# EUROPÄISCHE PATENTSCHRIFT

(11) **EP 4 480 300 B1**
(45) Veröffentlichungstag und Bekanntmachung des Hinweises auf die Patenterteilung: **15.07.2026**
(21) Anmeldenummer: 24178825.6
(22) Anmeldetag: 29.05.2024
(51) Int. Cl.: A01D 45/02, A01D 63/04, A01D 65/02, A01D 43/08, A01D 57/01

(54) **HALMTEILER EINER ERNTEBERGUNGSVORRICHTUNG MIT TEILERSPITZE**
CROP DIVIDER OF A HARVESTING DEVICE WITH DIVIDER TIP
DIVISEUR DE CULTURE D'UN DISPOSITIF DE RÉCOLTE AVEC POINTE DE DIVISEUR

(30) Priorität: 20.06.2023 DE 102023116099
(43) Veröffentlichungstag der Anmeldung: 25.12.2024
(73) Patentinhaber: Carl Geringhoff GmbH & Co. Kommanditgesellschaft, 59227 Ahlen (DE)
(72) Erfinder: Thiemann, Claudia, 59269 Beckum (DE); Hense, Johannes, 59329 Wadersloh (DE); Steen, Rüdiger, 26831 Bunde (DE)
(74) Vertreter: Weeg, Thomas

(56) Entgegenhaltungen:
- GB-A- 1 093 539
- US-A- 2 141 299
- US-A- 2 862 345
- US-A- 4 538 404

## Beschreibung

Die vorliegende Erfindung bezieht sich auf eine Erntebergungsvorrichtung nach dem Oberbegriff des Anspruchs 1.

Aus der Schrift US 2003/0037528 A1 ist eine gattungsgemäße Erntebergungsvorrichtung in Gestalt eines Maispflückers mit einem Halmteiler und einer aus einem Kunststoff hergestellten Teilerspitze bekannt, die bei Bedarf frontseitig auf den Halmteiler aufgesteckt werden kann. Die Teilerspitze weist eine feste unveränderliche Grundform auf, die passend zur Grundform des von ihr abgedeckten Halmteilers ausgestaltet ist. Die Höhenführung und Abstützung der auf den Halmteiler aufgesteckten Teilerspitze bleibt gegenüber dem Halteiler ohne die aufgesteckte Teilerspitze unverändert.

Für die Funktion des Maispflückers ist es sehr wichtig, dass die Maisstängel sauber in den schmalen Pflückspalt einer jeweiligen Reiheneinheit einlaufen. Für den Mähdrescherfahrer ist die Zone, in der die Maisstängel in den Pflückspalt einlaufen, schwer einsehbar, sie wird von den einlaufenden Pflanzen verdeckt. Es kann zudem bei der Aussaat der Maiskörner zu Ablageungenauigkeiten gekommen sein, so dass die Maisstängel nicht genau in einer Linie mit den genau passenden Abständen zu den in parallelen Reihen abgelegten Maiskörnern gewachsen sind. Um trotz dieser Ungenauigkeiten die jeweils zu erntenden Maisstängel in den Pflückspalt zu leiten, werden spitz zulaufende Halmteiler in einem Maispflücker verbaut, die mit ihrer Form die Maisstängel in Querrichtung zur Arbeitsrichtung passend in den Pflückspalt leiten. Durch ihre in Arbeitsrichtung konisch zulaufende und bodenseitig angeschnittene Grundform bilden die Halmteiler mit den Teilerspitzen eine Art Trichter, in dem die zu einer Reihe gehörenden Maisstängel dem Pflückspalt zugeleitet und die nicht zu einer Reihe gehörenden Maisstängel dem daneben angeordneten Pflückspalt zugewiesen oder bei außenliegenden Halmteilern ganz abgewiesen werden.

Es gestaltet sich allerdings unter schwierigeren Erntebedingungen wie beispielsweise bei Lagermais als besonders schwierig, auch unter solchen Bedingungen einen zuverlässigen Einlauf der Maisstängel in den Pflückspalt zu gewährleisten. Da die Maisstängel bei Lagermais häufig schon bodennah abgeknickt sind und längs und quer zur Reihe liegen können, muss ein Halmteiler mit seiner Teilerspitze unter den abgeknickten Maisstängeln hindurch in den Bestand hineinbewegt werden, um bei einer weiteren Vorfahrt der Erntebergungsvorrichtung die flach liegenden Maisstängel anzuheben, passend zum Pflückspalt auszurichten und diese abzustützen, bis sie in den Pflückspalt eingelaufen sind. Ob ein Halmteiler mit seiner Teilerspitze auch unter solch schwierigen Betriebsbedingungen zuverlässig funktioniert, ist von ihrer Form, ihrer Höhenführung und ihrer Abstützung abhängig.

Aus der Schrift WO 2018/134155 A1 ist es ebenfalls für einen Maispflücker bekannt, einen Halmteiler an unterschiedliche Erntebedingungen anpassen zu können. Dort ist ein Maispflücker zur Ernte von ihn Reihen stehenden Maispflanzen als ein Ausführungsbeispiel für eine Erntebergungsvorrichtung offenbart. Für jede Pflückreihe ist eine Reiheneinheit vorhanden, in die das Erntegut bei der Vorfahrt der Erntemaschine in den stehenden Bestand einläuft. In der Reiheneinheit laufen die Maisstängel einer Reihe in einen Pflückspalt ein, der seitlich von Pflückplatten begrenzt ist. Die in den Pflückspalt einlaufenden Maisstängel werden geschnitten und von Pflückwalzen nach unten gerissen, wobei die von den Pflückplatten zurückgehaltenen Maiskolben dabei vom Maisstängel abgestreift und von Förderorganen zur weiteren Bearbeitung durch den Mähdrescher aus dem Pflückbereich abgefördert werden. Je nach Bedarf kann die Haube, die als Teilerspitze ausgebildet ist, mit ihrem der Arbeitsrichtung der Erntebergungsvorrichtung abgewandten Ende in unterschiedliche Höhen eingestellt und arretiert werden, so dass die Haube in unterschiedlichen Anstellwinkeln zum Boden in den Bestand auf einem Feld hineingefahren werden kann. Das vordere Ende der in Arbeitsrichtung weisenden Teilerspitze bleibt dabei aber in einer gleichen Höhenlage. Die unterschiedliche Winkelstellung der Haube lässt den Einfluss unberücksichtigt, den die Abstützung und Höhenführung der Teilerspitze auf die Funktion eines Halmteilers hat.

Um einen Halmteiler an unterschiedliche Erntebedingungen anpassen zu können, ist es aus der Schrift US 2023/0117424 A1 bekannt, an einen in einem Maispflücker eingesetzten Halmteiler eine Verlängerung anzubauen, um dadurch die Prozesszeit für das Anheben, Ausrichten und Abstützen der Maisstängel zu verlängern. Die Verlängerungen sind aufwendig und teuer in der Herstellung, und es ist sehr aufwendig, die Verlängerungen an vorhandene Halmteiler nach Bedarf an- und wieder abzubauen.

Aus der Schrift US 2,862,345 A ist ein Erntevorsatz mit Reiheneinweisbügeln bekannt, an deren vorderen Enden um eine horizontale Achse schwenkbare Ährenheber befestigt sind. Die Ährenheber übergreifen die vorderen Enden der Reiheneinweisbügel.

Außerdem offenbart die Schrift GB 1 093 539 A einen Erntevorsatz gemäß der Präambel des beigefügten Anspruchs 1.

Es ist die Aufgabe der vorliegenden Erfindung, die Funktion der Halmteiler auch unter schwierigen Erntebedingungen zu verbessern.

Die Aufgabe wird für eine gattungsgemäße Erntebergungsvorrichtung mit den kennzeichnenden Merkmalen des Anspruchs 1 gelöst.

Bei der Erntebergungsvorrichtung handelt es sich um einen Maispflücker und der Halmteiler ist als eine Pflückerhaubenspitze ausgebildet, die einer Pflückeinheit vorgeordnet und schwenkbeweglich mit dieser verbunden ist. Gerade bei der Ernte von Mais ist es für einen optimalen Schnitt der Maispflanzen wichtig, dass die in Reihen stehenden Maisstängel einer passenden Pflückeinheit eines Maispflückers zugeführt werden. Deshalb werden die Pflückerhaubenspitzen von Maispflückern bei der Erntearbeit häufig in einer Höhe vorgehalten, in der sie einen ständigen Bodenkontakt haben. Wegen des ständigen Bodenkontaktes ist es bei Maispflückern besonders wichtig, dass die Pflückerhaubenspitzen der Bodenkontur mit einem möglichst geringen Verschleiß und ohne Beschädigungen folgen und die sperrigen Maisstängel sauber den jeweiligen Pflückeinheiten zuordnen.

Wenn der Halmteiler einen Wechseleinsatz aufweist, der in einer ersten Montagestellung mit seiner Form über einen umgebenden Teil der Auflagefläche um ein erstes Überstandsmaß in Richtung des Bodens und in einer zweiten Montagestellung mit seiner Form über einen umgebenden Teil der Auflagefläche um ein zweites Überstandsmaß in Richtung des Bodens übersteht, kann der Halmteiler auf eine einfache Weise an unterschiedliche Bodenverhältnisse angepasst werden. Bei weichen Bodenverhältnissen ist eine großflächigere Auflagefläche vorteilhaft, um den Halmteiler über kleinere Unebenheiten des Bodens hinweg zu heben. Eine schmale und kleinflächige Auflagefläche würde in den Boden einsinken, was zu einem erhöhten Verschleiß führt und Schäden an dem Halmteiler verursachen kann. Bei härteren Bodenverhältnissen ist eine großflächigere Auflagefläche aber auch nachteilig, weil jede von der großflächigeren Auflagefläche erfasste Bodenunebenheit sofort zu einer Veränderung der Höhenlage des Halmteilers führt. Der Halmteiler ist dann in ständiger Bewegung, was dazu führen kann, dass er am Boden liegende Pflanzen nicht mehr sicher erfasst. Die Form der Teilerspitze und die Ausgestaltung der Gleitplatte stellen also immer nur einen Kompromiss dar, mit dem die verschiedenen Erntebedingungen bestmöglich abgedeckt werden sollen, der aber gerade deshalb für die meisten Erntebedingungen suboptimal gestaltet ist.

Der Wechseleinsatz eröffnet nur die Möglichkeit, die Formen des Halmteilers und der Teilerspitze sowie die Ausgestaltung der Gleitplatte an unterschiedliche Bodenbedingungen durch unterschiedliche Montagestellungen des Wechseleinsatzes wahlweise anpassen zu können. Wenn der Wechseleinsatz in einer ersten Montagestellung mit seiner Form über einen umgebenden Teil der Auflagefläche um ein erstes Überstandsmaß in Richtung des Bodens übersteht, liegt die Gleitplatte bei eher harten Böden nicht mehr mit ihrer vollen Auflagefläche auf dem Boden auf. Vielmehr gleitet nur noch der um ein erstes Überstandsmaß über einen umgebenden Teil der Auflagefläche überstehende Wechseleinsatz über die Bodenfläche, wenn der Wechseleinsatz in seiner ersten Montagestellung montiert ist, und hält dabei den umgebenden Teil der Auflagefläche der Gleitplatte in einer Distanz zur Bodenoberfläche. Da der mit seiner Form über den umgebenden Teil der Auflagefläche hervorstehende Wechseleinsatz mit seiner dem Boden zugewandten Oberfläche nur eine Teilfläche der Auflagefläche der Gleitplatte abdeckt, wird diese Teilfläche von erheblich weniger Bodenunebenheiten zu Ausweichbewegungen angeregt als die volle Auflagefläche der Gleitplatte. Die Teilerspitze bewegt sich dadurch weniger häufig und mit geringeren Auslenkbewegungen und damit insgesamt erheblich ruhiger über den Boden. Die von dem in der ersten Montagestellung befindlichen Wechseleinsatz in einer Distanz zum Boden gehaltene Auflagefläche der Gleitplatte hat dabei auch weniger Bodenkontakte und Anstöße an Fremdkörper, wodurch deren Verschleiß reduziert ist und der Reparaturbedarf sinkt. Bei einem härteren Boden reicht die dem Boden zugewandte Teilfläche des Wechseleinsatzes gleichwohl aus, den Halmteiler mit seiner Teilerspitze über Bodenunebenheiten hinweg zu heben und ein Einsinken der Teilerspitze in den Boden zu verhindern. Auch dadurch wird der Verschleiß sowie das Reparaturrisiko verringert. Bei weicheren Böden besteht allerdings das Risiko, dass die dem Boden zugewandte Teilfläche des Wechseleinsatzes nicht mehr ausreicht, eine zufriedenstellende Höhenführung des Halmteilers zu bewirken.

Wenn der Wechseleinsatz in einer zweiten Montagestellung mit seiner Form über einen umgebenden Teil der Auflagefläche um ein zweites Überstandsmaß in Richtung des Bodens übersteht und dieses Überstandsmaß kleiner ist als das erste Überstandsmaß, verringert sich naturgemäß der Abstand entsprechend, mit dem der umgebenden Teil der Auflagefläche vom Wechseleinsatz vom Boden entfernt gehalten wird. In der zweiten Montagestellung des Wechseleinsatzes hat der den Wechseleinsatz umgebende Teil der Auflagefläche häufiger einen Bodenkontakt. Dadurch wirkt der den Wechseleinsatz umgebende Teil der Auflagefläche der Gleitplatte in der zweiten Montagestellung des Wechseleinsatzes häufiger bei der Höhenführung des Halmteiles mit. Der umgebende Teil der Auflagefläche erzeugt auch viel eher eine nach oben gerichtete Kraftkomponente, als es der Fall wäre, wenn sich der Wechseleinsatz in der ersten Montagestellung befände. In weichen Bodenverhältnissen ergibt sich auf diese Weise durch die zweite Montagestellung des Wechseleinsatzes und dem daraus folgenden zweiten Überstandsmaß eine bessere Höhenführung, und ein Einsinken des Halmteilers in den Boden wird dadurch sicherer vermieden.

Aus der verbesserten Höhenführung des Halmteilers folgt auch eine bessere Aufnahme von auf dem Boden liegenden Pflanzen. Die Teilerspitze des Halmteilers wird auch unter schwierigeren Bodenverhältnissen gleichmäßiger in einer Höhe geführt, in der die Teilerspitze auf dem Boden liegende Halme oder Stängel des Ernteguts unterfasst und danach unmittelbar anhebt. Der Schnitt und der Einzug des Ernteguts in die Erntebergungsvorrichtung wird dadurch verbessert.

Wenn das zweite Überstandsmaß dem Wert 0 entspricht, steht der Wechseleinsatz mit seiner Form nicht mehr über den umgebenden Teil der Auflagefläche der Gleitplatte mit einem Überstandsmaß hervor, die Form des Wechseleinsatzes und der umgebende Teil der Auflagefläche gehen dann plan ineinander über. Die Form des Wechseleinsatzes bildet dann einen Teil der Auflagefläche der Gleitplatte.

Der Wechseleinsatz bietet den Vorteil, in einer Montagestellung immer an einem jeweiligen Halmteiler der Erntebergungsvorrichtung mitgeführt werden zu können. Die Erntebergungsvorrichtung ist dadurch immer einsatzbereit. Es ist nicht erforderlich, zum Umbau der Erntebergungsvorrichtung gesonderte Teile vorzuhalten und mitzuführen. Wenn ein Wechseleinsatz an einem Halmteiler vorhanden ist, bietet dieser bereits die Option, durch einen einfachen Wechsel seiner Montagestellung die Funktion des Halmteilers zu verbessern. Nur im Bedarfsfall kann ein Maschinenbetreiber die Montagestellung des Wechseleinsatzes verändern, um die Funktion des Halmteilers zu verbessern.

Der Wechseleinsatz kann so ausgebildet sein, dass er mit seiner Form je nach seiner Montagestellung zumindest zwei unterschiedliche Überstandsmaße ausbildet. Der Wechseleinsatz kann aber auch so ausgestaltet sein, dass er mit seiner Form drei oder vier unterschiedliche Überstandsmaße ausbildet. Die unterschiedlichen Überstandsmaße können sich dadurch einstellen, indem der Wechseleinsatz in einer geänderten Einbaulage mit dem Halmteiler verbunden wird. So ist es beispielsweise möglich, den Wechseleinsatz um seine Querachse um 180° verdreht in den Halmteiler einzubauen, um diesen aus einer ersten Montagestellung in eine zweite Montagestellung oder umgekehrt zu bringen. Bei vier an einem Wechseleinsatz einstellbaren Montagestellungen ist es möglich, den Wechseleinsatz beispielsweise um 90°, 180° oder 270° um seine Querachse zu drehen, um diesen in eine veränderte Montagestellung zu bringen. Je nach Ausgestaltung des Wechseleinsatzes können auch Drehbewegungen um ungleiche Winkelgrade erforderlich sein, um eine Montagestellung zu verändern.

Es können auch mehrere Wechseleinsätze für einen Halmteiler vorhanden sein, die unterschiedliche Überstandsmaße ausbilden. In diesem Fall können verschiedene Wechseleinsätze gegeneinander getauscht werden, wenn mit dem anderen Wechseleinsatz mögliche Überstandsmaße eingestellt werden sollen. Wenn nur ein einziger Wechseleinsatz vorgehalten wird, der mehrere Überstandsmaße ausbildet, sind die Variationsmöglichkeiten durch die unterschiedlichen Montagestellungen, mit denen dieser Wechseleinsatz am Halmteiler befestigt werden kann, naturgemäß beschränkt. Durch weitere Wechseleinsätze, die zusätzliche Montagestellungen und Überstandsmaße bieten, können die Variationsmöglichkeiten erheblich ausgedehnt werden.

Aus den vorstehenden Ausführungen wird deutlich, dass sich je nach Überstandsmaß des Wechseleinsatzes und der jeweiligen Bodenbeschaffenheit das Bodenkopier- und Einsinkverhalten des Halmteilers sowie dessen Aufnahme von auf dem Boden oder in Bodennähe liegenden Pflanzen ändert.

Um die Montagestellungen des Wechseleinsatzes möglichst einfach ändern zu können, ist es vorteilhaft, den Wechseleinsatz mit Verbindungsmitteln am Halmteiler zu befestigen, die einen schnellen, gegebenenfalls auch werkzeuglosen Wechsel der Montagestellungen ermöglichen. So können beispielsweise geeignete Klemm-, Haken-, Bajonett-, Clips- und Langlochbefestigungen vorgesehen sein, oder ein Wechseleinsatz wird mit Schrauben in seiner Montagestellung befestigt. Die Befestigungspunkte sind für die jeweiligen Montagestellungen spiegelbildlich ausgeführt, sodass am Halmteiler vorhandene Verbindungsmittel für die Befestigung eines Wechseleinsatzes in verschiedenen Montagestellungen nutzbar sind.

Wenn hier die Rede davon ist, dass ein Wechseleinsatz mit seiner Form um ein Überstandsmaß über einen umgebenden Teil der Auflagefläche in Richtung des Bodens übersteht, so ist mit der Form insbesondere die Umfangsform des Wechseleinsatzes in dem Bereich gemeint, in dem der Wechseleinsatz mit seinem Raumkörper über den umgebenden Teil der Auflagefläche übersteht. Der Wechseleinsatz kann in diesem Bereich aus einem massiven Material, insbesondere Metall, hergestellt sein. Er verfügt dann über eine hohe Widerstandskraft gegen Beschädigungen sowie über ein akzeptables Verschleißverhalten. Der Wechseleinsatz kann einstückig hergestellt oder aus mehreren Bauteilen zusammengesetzt sein. Wenn in dieser Beschreibung von "vorn" oder "vorne" oder "hinten" die Rede ist, so bezieht sich der Begriff "vorne" immer auf eine in Arbeitsrichtung ausgerichtete Richtung und der Begriff "hinten" auf eine der Arbeitsrichtung entgegengesetzten Richtung.

Wenn zu dieser Erfindung von einer Erntebergungsvorrichtung die Rede ist, so sind damit Maispflücker gemeint.

Nach einer Ausgestaltung der Erfindung ist der Wechseleinsatz zumindest im Überstandsbereich als plattenförmiger Körper ausgebildet. Durch die Plattenform erhält der Wechseleinsatz eine ausreichende Stabilität und Festigkeit. Als Platte kann der Wechseleinsatz beispielsweise eine Materialstärke von 5 mm oder mehr aus einem metallischen Material aufweisen.

Nach einer Ausgestaltung der Erfindung weist die Auflagefläche der Gleitplatte eine Durchtrittsöffnung auf, durch die der Wechseleinsatz in zumindest einer Montagestellung hindurchgreift. Über die Durchtrittsöffnung kann der Wechseleinsatz in einer zentralen Position innerhalb der Auflagefläche der Gleitplatte angeordnet werden. Über die Kanten der Durchtrittsöffnung wird der Wechseleinsatz gegen einwirkende Kräfte abgestützt und stabilisiert. Der den Wechseleinsatz umgebende Teil der Auflagefläche ist zur Durchtrittsöffnung benachbart ausgebildet. Der Wechseleinsatz und der diesen umgebende Teil der Auflagefläche bilden eine Funktionseinheit, über die der Halmteiler auf dem Boden abgestützt in seiner Arbeitshöhe funktionsgerecht geführt wird. Die Durchtrittsöffnung sollte dabei so geformt und bemessen sein, dass der Wechseleinsatz bei seiner Montage oder Demontage durch sie hindurchgesteckt werden kann, die Durchtrittsöffnung aber bevorzugt vollständig oder nahezu vollständig vom Wechseleinsatz geschlossen ist, wenn sich der Wechseleinsatz in einer Montagestellung befindet. Durch eine geschlossene Durchtrittsöffnung kann kein Material in den Bereich auf der dem Boden abgewandten Seite der Gleitplatte gelangen, wo es Montagearbeiten an dem Wechseleinsatz erschweren könnte. Bei einem möglichst vollständigen Verschluss der Durchtrittsöffnung verringert sich auch das Risiko, dass der Wechseleinsatz in einer Montagestellung von Material verklemmt werden könnte, das sich in Zwischenraum zwischen dem Wechseleinsatz und den seitlichen Kanten der Durchtrittsöffnung festsetzt.

Nach einer Ausgestaltung der Erfindung sind die Befestigungsmittel, über die der Wechseleinsatz mit dem zugehörigen Halmteiler verbunden ist, auf der dem Boden abgewandten Seite der Gleitplatte angeordnet. **In** diesem Bereich sind die Befestigungsmittel gegen Verschmutzung und Beschädigung geschützt. Der Umbau eines Wechseleinsatzes von einer Montagestellung in eine andere Montagestellung wird dadurch vereinfacht. Unnötiger Verschleiß an den Befestigungsmitteln wird vermieden.

Nach einer Ausgestaltung der Erfindung ist die Auflagefläche der Gleitplatte in ihrem vorderen Teil zur vorderen Spitze der Teilerspitze hin im Verhältnis zum hinteren Bereich in einem Anstellwinkel nach oben verlaufend ausgebildet. Durch die Anstellung des vorderen Teils der Auflagefläche in einem Anstellwinkel bildet die Gleitplatte in ihrem vorderen Teil einer Art Rampe aus, mit der diese im Erntebetrieb auf eine Bodenerhöhung auflaufen und dabei den Halmteiler im Verlauf der Fahrtbewegung anheben kann. Dadurch prallt die Gleitplatte im Erntebetrieb nicht stumpf mit ihrer Spitze auf ein Hindernis auf, sondern kann über dieses leichter mit einer kurzen Hubbewegung hinweggleiten. Die der Bodenkontur folgende Auf- und Abwärtsbewegung des Halmteilers ist dadurch stoßfrei und geschmeidig gleitend.

Nach einer Ausgestaltung der Erfindung reicht die untere und vordere Spitze des Wechseleinsatzes im Überstandsbereich in zumindest einer Montagestellung bis in die Ebene des hinteren Bereichs der Auflagefläche der Gleitplatte hinab. Durch das Herabreichen des Wechseleinsatzes bis in die Ebene des hinteren Bereichs der Auflagefläche der Gleitplatte hinab kann der Wechseleinsatz Fremdkörper wie Steine und Kluten anstoßen und beiseiteschieben, die zumindest bis in die Ebene des hinteren Bereichs der Auflagefläche der Gleitplatte aufragen. Durch das Beiseiteschieben von Hindernissen werden unnötige Auf- und Abwärtsbewegungen des Halmteilers vermieden. Indem der Wechseleinsatz nicht tiefer als bis in diese Ebene hinabreicht, wird vermieden, dass der Halmteiler den Boden unnötig aufwühlt und Steine und andere Fremdkörper an die Oberfläche befördert, die dort Probleme machen, die nicht auftreten würden, wenn sie nicht zuvor vom Wechseleinsatz an die Oberfläche befördert worden wären. In einer Montagestellung des Wechseleinsatzes, in der das Überstandsmaß geringer als das maximal mögliche Überstandsmaß ausfallen soll, muss die untere und vordere Spitze des Wechseleinsatzes im Überstandsbereich zumindest nicht zwingend bis in die Ebene des hinteren Bereichs der Auflagefläche der Gleitplatte hinabreichen.

Nach einer Ausgestaltung der Erfindung reicht die untere und vordere Spitze des Wechseleinsatzes im Überstandsbereich in zumindest einer Montagestellung bis in einen der Teilerspitze vorgelagerten Bereich hinein. Indem sich der Wechseleinsatz bis in einen Bereich hinein erstreckt, der der Teilerspitze vorgelagert ist, kann der Wechseleinsatz im Erntebetrieb Fremdkörper beiseiteschieben, bevor diese mit der Teilerspitze kollidieren. Beschädigungen an der Verteilerspitze selbst können dadurch vermieden werden, und/oder Anstöße von Fremdkörpern an der Teilerspitze fallen weniger heftig aus, wodurch Schäden ganz vermieden oder zumindest geringer gehalten werden können. In einer Montagestellung des Wechseleinsatzes, in der das Überstandsmaß geringer als das maximal mögliche Überstandsmaß ausfallen soll, muss die untere und vordere Spitze des Wechseleinsatzes im Überstandsbereich nicht zwingend bis in einen der Teilerspitze vorgelagerten Bereich hineinreichen.

Nach einer Ausgestaltung der Erfindung ist die Teilerspitze als ein vom übrigen Halmteiler separates als Verschleißschuh ausgebildetes Bauteil ausgestaltet, und der Wechseleinsatz ist in den Montagestellungen im Verschleißschuh gehalten. Die Teilerspitze eines Halmteilers ist durch den ständigen Kontakt mit dem Boden einem besonderen Verschleiß ausgesetzt. Darüber hinaus besteht wegen möglicher Kollisionen mit Fremdkörpern und Hindernissen für die Teilerspitze auch ein besonderes Risiko, beschädigt zu werden. Dasselbe gilt auch für den Wechseleinsatz. Um bei einem aufgetretenen Verschleiß oder einer Beschädigung die Reparatur zu vereinfachen, ist es vorteilhaft, wenn die Teilerspitze als ein gesonderter Verschleißschuh ausgebildet und der Wechseleinsatz im Verschleißschuh gehalten ist, sodass auch dieser leicht austauschbar ist. Ein weiterer Vorteil kann darin gesehen werden, dass einen Teil des Halmteilers aus einem Kunststoff hergestellt ist und der Verschleißschuh zusammen mit dem Wechseleinsatz aus einem metallischen Material wie beispielsweise Stahl oder Guss hergestellt werden kann, wenn diese als separate Bauteile ausgebildet sind. Natürlich kann der Verschleißschuh aber auch aus einem Kunststoff hergestellt sein.

Es wird ausdrücklich darauf hingewiesen, dass die vorstehend erläuterten Ausgestaltungen der Erfindung jeweils für sich, aber auch in einer beliebigen Kombination miteinander mit dem Gegenstand des Hauptanspruchs kombinierbar sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Schnittansicht von der Seite auf einen Maispflücker als Erntebergungsvorsatz,
- Fig. 2:: eine Seitenansicht auf einen Verschleißschuh mit einem Wechseleinsatz in einer ersten Montagestellung,
- Fig. 3:: eine perspektivische Ansicht des in Fig. 2 gezeigten Verschleißschuhs,
- Fig. 4:: eine Seitenansicht auf einen Verschleißschuh mit einem Wechseleinsatz in einer zweiten Montagestellung, und
- Fig. 5:: eine perspektivische Ansicht des in Fig. 4 gezeigten Verschleißschuhs.

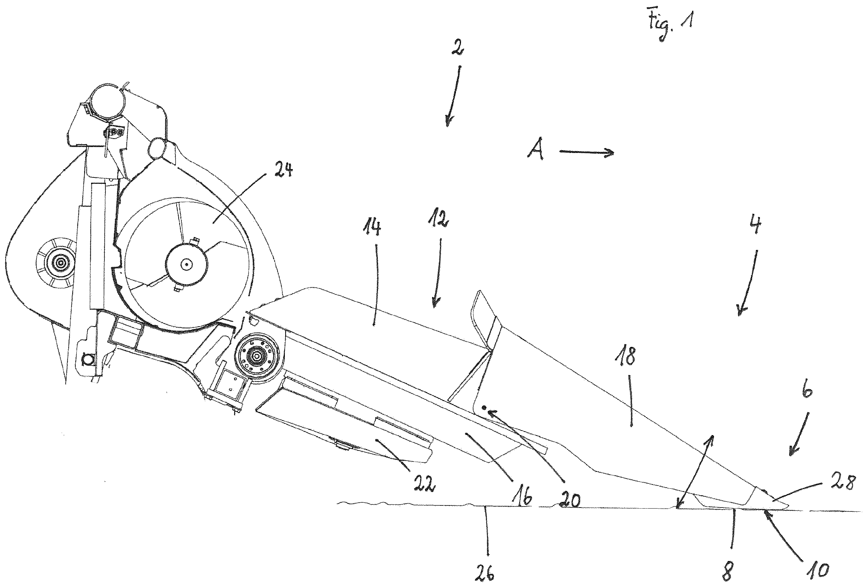

**In** Fig. 1 ist eine Schnittansicht von der Seite auf einen Maispflücker als ein Ausführungsbeispiel für eine Erntebergungsvorrichtung 2 gezeigt. Die Erntebergungsvorrichtung 2 verfügt in ihrem vorderen Bereich über einen Halmteiler 4 mit einer Teilerspitze 6. Die Teilerspitze 6 weist in Arbeitsrichtung A der Erntebergungsvorrichtung 2 und hat eine in Arbeitsrichtung A konisch zulaufende und bodenseitig angeschnittene Grundform. An der Unterseite der Teilerspitze 6 befindet sich in ihrem bodenseitigen Anschnittbereich eine Gleitplatte 8, die ebenfalls eine sich in Arbeitsrichtung A der Erntebergungsvorrichtung 2 verjüngende Grundform aufweist. Die Gleitplatte 8 verfügt auf ihrer dem Boden 26 zugewandten Seite über einer Auflagefläche 10, mit der die Gleitplatte 8 über den Boden 26 gleiten kann.

Der Maispflücker verfügt über eine Pflückvorrichtung 12, in der die Maiskolben vom Stängel getrennt werden. Die Pflückvorrichtung 12 wird teilweise von einer Pflückerhaube 14 abgedeckt. Unterhalb der Pflückerhaube 14 befindet sich die Pflückeinheit 16. Vor der Pflückeinheit 16 befindet sich die Pflückerhaubenspitze 18, die um den Drehpunkt 20 gelenkig mit der Pflückerhaube 14 und damit auch der Pflückeinheit 16 verbunden ist. Die Pflückerhaubenspitze 18 bildet im Ausführungsbeispiel den Halmteiler 4. Üblicherweise sind in einem Maispflücker mehrere Pflückvorrichtungen 12 nebeneinander angeordnet, beispielsweise 6, 8 oder 12 Pflückvorrichtungen 12. Die in die Pflückvorrichtungen 12 einlaufenden Maisstängel werden über die Halmteiler 4 einer jeweiligen Pflückvorrichtung 12 zugeleitet.

Unterhalb der Pflückvorrichtung 12 befindet sich eine Häckselvorrichtung 22. Im gezeigten Ausführungsbeispiel besteht die Häckselvorrichtung 22 aus zwei Häckselmessern, die an einer Messerwelle befestigt sind und mit hoher Drehzahl während des Betriebs der Erntemaschine umlaufen. Die Häckselmesser schneiden die Maisstängel bodennah ab, zerhäckseln allerdings auch die Erntegutstängel, die von den Pflückwalzen nach unten gerissen werden. Dazu ist die Häckselvorrichtung 22 etwa unterhalb der Pflückvorrichtung 12 angeordnet.

Im Bereich der Pflückvorrichtung 12 laufen die Maisstängel bei der Vorfahrt der Erntemaschine in einen von seitlichen Pflückplatten begrenzten Pflückspalt ein und werden dort von Pflückwalzen erfasst, die sich unterhalb von Pflückplatten befinden. Dabei werden die Maiskolben von den an den Pflückspalt anstoßenden Kanten der Pflückplatten vom Stängel abgestreift. Die vom Stängel gelösten Maiskolben werden sodann von einer Fördervorrichtung 24 einer zeichnerisch nicht näher dargestellten Erntemaschine wie beispielsweise einem Mähdrescher zugeführt, an die der Erntebergungsvorsatz 2 angebaut ist. In Fig. 1 ist mit der Ziff. 24 eine Förderschnecke bezeichnet, im Bereich der Pflückvorrichtung 12 befinden sich allerdings auch noch Kettenförderer mit Mitnehmern, die die gepflückten Maiskolben der Förderschnecke zu fördern, die in der Darstellung nicht gezeigt sind.

Bei der Erntearbeit wird die Erntebergungsvorrichtung 2 von der Erntemaschine in einer Höhe gehalten, in der die Pflückerhaubenspitze 18 mit der Auflagefläche 10 der Gleitplatte 8 auf dem Boden 26 aufliegt. Bei Unebenheiten des Bodens 26 kann sich die Pflückerhaubenspitze 18 mit ihrem in Arbeitsrichtung A weisenden Ende um die Drehachse 20 nach oben und unten bewegen, wie mit dem Doppelpfeil angedeutet. Die Pflückerhaubenspitze 18 schwimmt dadurch auf der Oberfläche des Bodens 26 und gleicht sich dadurch fortlaufend einer wechselnden Kontur der Bodenoberfläche an. Dadurch wird die Teilerspitze 6 immer in einer Höhe gehalten, in der sie liegende Maisstängel anheben und genauso wie stehende Maisstängel einer Pflückeinheit 16 zuleiten kann.

Im gezeigten Ausführungsbeispiel verfügt die Pflückerhaubenspitze 18 über einen Verschleißschuh 28, der im Ausführungsbeispiel die Teilerspitze 6 des Halmteilers 4 ausbildet. Der Verschleißschuh 28, der im Ausführungsbeispiel die Teilerspitze 6 bildet, ist als ein vom übrigen Halmteiler 4 separat ausgebildetes Bauteil ausgestaltet.

Aus der seitlichen Ansicht in Fig. 1 ist nachvollziehbar, dass die Teilerspitze 6 bei der Erntearbeit mit dem Verschleißschuh 28 in den Boden eintauchen kann, wenn der von der Auflagefläche 10 erzeugte Auftrieb nicht ausreicht, um die Teilerspitze 6 auf der Bodenoberfläche zu halten. Die Auflagefläche 10 muss deshalb ausreichend groß bemessen sein, um einen ausreichenden Auftrieb zu erzeugen. Eine zu groß bemessene Auflagefläche 10 führt allerdings auch zu einem unnötigen Verschleiß und einem Beschädigungsrisiko, insbesondere auf festeren Böden, bei denen das Risiko nicht so hoch ist, dass die Teilerspitze 6 in den Boden eindringen könnte.

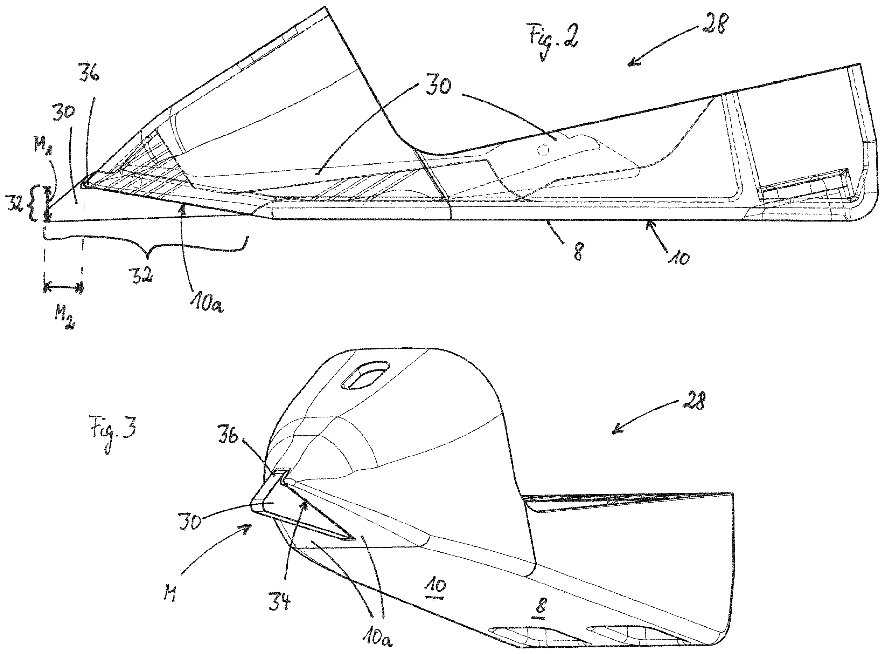

Die Fig. 2 zeigt einen am Halmteiler 4 befestigbaren Verschleißschuh 28, der im Bereich seiner vorderen Spitze 36 einen Wechseleinsatz 30 aufweist. Der Wechseleinsatz 30 steht in der in Fig. 2 gezeigten ersten Montagestellung mit einem Teil seiner Form in dem durch geschweifte Klammern kenntlich gemachten Überstandsbereich 32 mit dem umgebenden Teil 10a der Auflagefläche 10 um ein erstes Überstandsmaß M in Richtung des Bodens 26 über. Da der vordere Teil 10a der Auflagefläche 10 der Gleitplatte 8 im Ausführungsbeispiel zur vorderen Spitze 36 hin im Verhältnis zum hinteren Bereich in einem Anstellwinkel nach oben verlaufend ausgebildet ist, steht der Wechseleinsatz 30 mit einer etwa dreieckigen Form über den umgebenden Teil 10a der Auflagefläche 10a über.

Der nicht über den umgebenden Teil 10a der Auflagefläche 10a nach außen überstehende Teil des Wechseleinsatzes 30 befindet sich im Inneren des Verschleißschuhs 28 und ist in gestrichelten Linien dargestellt. Im gezeigten Ausführungsbeispiel ergibt sich aus der Form des Wechseleinsatzes 30 im Überstandsbereich 32 sowohl ein Überstand mit dem maximalen Überstandsmaß M₁ in vertikaler Richtung im Verhältnis zur vordersten Spitze des Verschleißschuhs 28 als auch einen Überstand mit dem maximalen Überstandsmaß M₂ in horizontaler Richtung im Verhältnis zur vordersten Spitze des Verschleißschuhs 28. Durch die ansteigende Form der Auflagefläche 10 in ihrem vorderen Teil 10a und die annähernd waagerecht verlaufende untere Basislinie des überstehenden Teils des Wechseleinsatzes 30 wird das Überstandsmaß M in vertikaler Richtung nach vorne hin zunehmend größer. Die untere und vordere Spitze des Wechseleinsatzes 30 reicht im Überstandsbereich in horizontaler Richtung in der gezeigten ersten Montagestellung auch bis in einen der Spitze des Verschleißschuhs 28 und damit der Teilerspitze 6 vorgelagerten Bereich hinein. Die Form des Wechseleinsatzes 30 kann auch so gewählt werden, dass die entsprechenden Überstandsmaße M vom gezeigten Ausführungsbeispiel abweichen. Es ist auch erkennbar, dass die untere und vordere Spitze des Wechseleinsatzes 30 in der gezeigten Montagestellung im Überstandsbereich 32 in vertikaler Richtung bis in die Ebene des hinteren Bereichs der Auflagefläche 10 der Gleitplatte 8 hinabreicht.

In Fig. 3 ist eine perspektivische Ansicht des in Fig. 2 gezeigten Verschleißschuhs 28 gezeigt. In dieser perspektivischen Ansicht ist gut erkennbar, dass der Wechseleinsatz 30 zumindest im Überstandsbereich M als plattenförmiger Körper ausgebildet ist. Es ist auch erkennbar, dass die Auflagefläche 10a der Gleitplatte 8 eine Durchtrittsöffnung 34 aufweist, durch die der Wechseleinsatz 30 in der gezeigten ersten Montagestellung hindurchgreift.

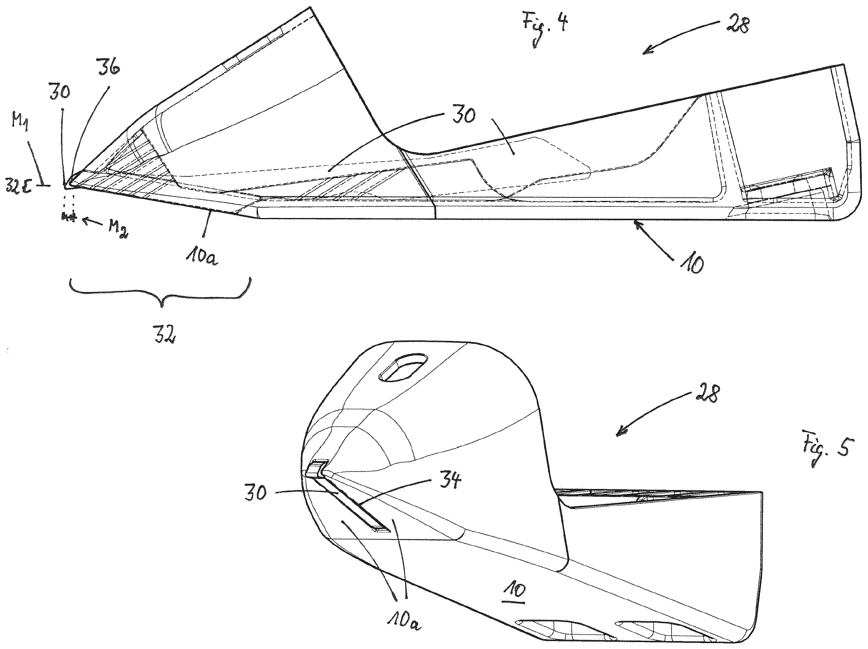

In den Fig. 4 und 5 ist der Verschleißschuh 28 gezeigt, wenn sich der Wechseleinsatz 30 in einer zweiten Montagestellung befindet. Die Form des Wechseleinsatzes 30 ist in dem gezeigten Ausführungsbeispiel so gewählt, dass dieser mit seiner Form mit einem zweiten Überstandsmaß, dessen Wert gleich oder nahezu 0 beträgt, in Richtung des Bodens 26 übersteht. Das Überstandsmaß M₁ in vertikaler Richtung beträgt tatsächlich 0, in horizontaler Richtung ist das Überstandsmaß M₂ nahezu 0.

Aus den gestrichelt dargestellten Konturen des Wechseleinsatzes 30, der sich im Inneren des Verschleißschuhs 28 befindet, ist erkennbar, dass der Wechseleinsatz 30 im Vergleich zur ersten Montagestellung, die in den Fig. 2 und 3 gezeigt ist, um 180° um die Hochachse gedreht worden ist, um die zweite Montagestellung einnehmen zu können. Aus dem Vergleich der Darstellungen in den Fig. 2 und 3 im Verhältnis zu den Fig. 4 und 5 ist erkennbar, dass das Überstandsmaß M, um die die Form des Wechseleinsatzes 30 über den umgebenden Teil 10a der Auflagefläche 10 in der zweiten Montagestellung kleiner ist als in der ersten Montagestellung.

In der gezeigten zweiten Montagestellung ist der umgebende Teil 10a der Auflagefläche 10 in der Seitenansicht plan, sodass der Verschleißschuh 28 bei einem Bodenkontakt mit der gesamten Fläche der Auflagefläche 10 auf dem Boden 26 gleiten kann. Wenn sich der Wechseleinsatz 30 in der in den Fig. 2 und 3 gezeigten ersten Montagestellung befindet, würde zumindest auf härteren Böden 26 die annähernd waagerecht verlaufende untere Basislinie des überstehenden Teils des Wechseleinsatzes 30 auf dem Boden gleiten, der umgebende Teil 10a der Auflagefläche 10 jedoch nicht.

In der perspektivischen Ansicht in Fig. 5 ist auch erkennbar, dass der Wechseleinsatz 30 in der zweiten Montagestellung die Durchtrittsöffnung 34 mit seiner Form ausfüllt, sodass durch die Durchtrittsöffnung 34 keine Fremdkörper oder Bodenbestandteile in den Innenraum des Verschleißschuhs 28 gelangen können.

Das vorstehend beschriebene Ausführungsbeispiel dient nur der Erläuterung der Erfindung. Die Erfindung ist nicht auf das gezeigte Ausführungsbeispiel beschränkt. **Die** Erfindung beschränkt sich auf den durch die beigefügten Ansprüche definierten Schutzumfang.

### Bezugszeichenliste

- 2: Erntebergungsvorrichtung
- 4: Halmteiler
- 6: Teilerspitze
- 8: Gleitplatte
- 10: Auflagefläche
- 12: Pflückvorrichtung
- 14: Pflückerhaube
- 16: Pflückeinheit
- 18: Pflückerhaubenspitze
- 20: Drehpunkt
- 22: Häckselvorrichtung
- 24: Fördervorrichtung
- 26: Boden
- 28: Verschleißschuh
- 30: Wechseleinsatz
- 32: Überstandsbereich
- 34: Durchtrittsöffnung
- 36: vordere Spitze
- A: Arbeitsrichtung
- M: Überstandsmaß

## Patentansprüche

1. Erntebergungsvorrichtung (2) mit zumindest einem Halmteiler (4), der eine in Arbeitsrichtung (A) der Erntebergungsvorrichtung (2) weisende Teilerspitze (6) aufweist, die eine in Arbeitsrichtung (A) konisch zulaufende und bodenseitig angeschnittene Grundform hat, wobei im bodenseitigen Anschnittbereich der Teilerspitze (6) eine Gleitplatte (8) angeordnet ist, die eine sich in Arbeitsrichtung (A) der Erntebergungsvorrichtung (2) verjüngende Grundform aufweist und die auf ihrer dem Boden (26) zugewandten Seite eine Auflagefläche (10) ausbildet, mit der die Teilerspitze (6) bei einem Bodenkontakt auf dem Boden (26) gleitet, wobei es sich bei der Erntebergungsvorrichtung (2) um einen Maispflücker handelt, und der Halmteiler (4) als eine Pflückerhaubenspitze (18) ausgebildet ist, die einer Pflückeinheit (16) vorgeordnet und schwenkbeweglich mit dieser verbunden ist, **dadurch gekennzeichnet, dass** der Halmteiler (4) einen Wechseleinsatz (30) aufweist, der in einer ersten Montagestellung mit seiner Form über einen umgebenden Teil (10a) der Auflagefläche (10) um ein erstes Überstandsmaß (M) in Richtung des Bodens (26) und in einer zweiten Montagestellung mit seiner Form über einen umgebenden Teil (10a) der Auflagefläche (10) um ein zweites Überstandsmaß (M) in Richtung des Bodens (26) übersteht, wobei das zweite Überstandsmaß (M) kleiner ist als das erste Überstandsmaß (M) und auch dem Wert 0 entsprechen kann.

2. Erntebergungsvorrichtung (2) nach Anspruch 1, **dadurch gekennzeichnet, dass** der Wechseleinsatz (30) zumindest im Überstandsbereich (M) als plattenförmiger Körper ausgebildet ist.

3. Erntebergungsvorrichtung (2) nach Anspruch 1 oder 2, **dadurch gekennzeichnet, dass** die Auflagefläche (10) der Gleitplatte (8) eine Durchtrittsöffnung (34) aufweist, durch die der Wechseleinsatz (30) in zumindest einer Montagestellung hindurchgreift.

4. Erntebergungsvorrichtung (2) nach einem der vorhergehenden Ansprüche, **dadurch gekennzeichnet, dass** die Befestigungsmittel, über die der Wechseleinsatz (30) mit dem zugehörigen Halmteiler (4) verbunden ist, auf der dem Boden (26) abgewandten Seite der Gleitplatte (8) angeordnet sind.

5. Erntebergungsvorrichtung (2) nach einem der vorhergehenden Ansprüche, **dadurch gekennzeichnet, dass** die Auflagefläche (10) der Gleitplatte (8) in ihrem vorderen Teil (10a) zur vorderen Spitze (36) der Teilerspitze (6) hin im Verhältnis zum hinteren Bereich in einem Anstellwinkel nach oben verlaufend ausgebildet ist.

6. Erntebergungsvorrichtung (2) nach Anspruch 5, **dadurch gekennzeichnet, dass** die untere und vordere Spitze des Wechseleinsatzes (30) in zumindest einer Montagestellung im Überstandsbereich (M) bis in die Ebene des hinteren Bereichs der Auflagefläche (10) der Gleitplatte (8) hinabreicht.

7. Erntebergungsvorrichtung (2) nach einem der Ansprüche 5 oder 6, **dadurch gekennzeichnet, dass** die untere und vordere Spitze des Wechseleinsatzes (30) im Überstandsbereich (M) in zumindest einer Montagestellung bis in einen der Teilerspitze (6) vorgelagerten Bereich hineinreicht.

8. Erntebergungsvorrichtung (2) nach einem der vorhergehenden Ansprüche, **dadurch gekennzeichnet, dass** die Teilerspitze (6) als ein vom übrigen Halmteiler (4) separates als Verschleißschuh (28) ausgebildetes Bauteil ausgestaltet ist, und der Wechseleinsatz (30) in den Montagestellungen im Verschleißschuh (28) gehalten ist.

## Claims

1. Harvesting device (2) comprising at least one crop divider (4) which has a divider tip (6) pointing in the working direction (A) of the harvesting device (2), said divider tip having a basic shape which tapers conically in the working direction (A) and is chamfered on the ground side, wherein, in the chamfered region on the ground side of the divider tip (6), there is arranged a sliding plate (8) which has a basic shape tapering in the working direction (A) of the harvesting device (2) and which forms, on its side facing the ground (26), a support surface (10) by means of which the divider tip (6) glides on the ground (26) during ground contact, wherein the harvesting device (2) is a corn picker, and the crop divider (4) is configured as a picker hood tip (18) which is arranged upstream of a picking unit (16) and connected pivotably thereto,
**characterized in that** the crop divider (4) has an interchangeable insert (30) which, in a first installation position, protrudes with its shape beyond a surrounding part (10a) of the support surface (10) by a first protrusion dimension (M) in the direction of the ground (26) and, in a second installation position, protrudes with its shape beyond a surrounding part (10a) of the support surface (10) by a second protrusion dimension (M) in the direction of the ground (26), wherein the second protrusion dimension (M) is smaller than the first protrusion dimension (M) and can also correspond to the value 0.

2. Harvesting device (2) according to Claim 1,
**characterized in that** the interchangeable insert (30) is configured, at least in the protruding region (M), as a plate-shaped body.

3. Harvesting device (2) according to Claim 1 or 2,
**characterized in that** the support surface (10) of the sliding plate (8) has a passage opening (34) through which the interchangeable insert (30) extends in at least one installation position.

4. Harvesting device (2) according to any one of the preceding claims,
**characterized in that** the fastening means by means of which the interchangeable insert (30) is connected to the associated crop divider (4) are arranged on the side of the sliding plate (8) facing away from the ground (26).

5. Harvesting device (2) according to any one of the preceding claims,
**characterized in that** the support surface (10) of the sliding plate (8) is configured in its front part (10a) so as to extend upwards towards the front tip (36) of the divider tip (6) at an angle of inclination relative to the rear region.

6. Harvesting device (2) according to Claim 5,
**characterized in that** the lower and front tip of the interchangeable insert (30), in at least one installation position in the protruding region (M), extends down to the plane of the rear region of the support surface (10) of the sliding plate (8).

7. Harvesting device (2) according to any one of Claims 5 or 6,
**characterized in that** the lower and front tip of the interchangeable insert (30), in the protruding region (M), extends in at least one installation position into a region arranged upstream of the divider tip (6).

8. Harvesting device (2) according to any one of the preceding claims,
**characterized in that** the divider tip (6) is configured as a component formed separately from the remaining crop divider (4) as a wear shoe (28), and the interchangeable insert (30) is held in the installation positions in the wear shoe (28).

## Revendications

1. Dispositif de récolte (2) avec au moins un diviseur d'épis (4), qui comporte une pointe (6) de diviseur pointant dans la direction de travail (A) du dispositif de récolte (2), qui a une forme de base conique dans la direction de travail (A) et rognée côté sol, une plaque de glissement (8) étant disposée dans la zone de rognage côté sol de la pointe (6) de diviseur, laquelle comporte une forme de base se rétrécissant dans la direction de travail (A) du dispositif de récolte (2) et qui forme sur son côté tourné vers le sol (26) une surface d'appui (10), avec laquelle la pointe (6) de diviseur glisse sur le sol (26) en cas de contact avec le sol, le dispositif de récolte (2) étant un cueilleur à maïs, et le diviseur d'épis (4) étant formé comme une pointe de capot de cueilleur (18), qui est disposée en amont d'une unité de cueillette (16) et est reliée à celle-ci de manière mobile par pivotement, **caractérisé en ce que** le diviseur d'épis (4) comporte un insert interchangeable (30), qui dépasse, dans une première position de montage, avec sa forme sur une partie environnante (10a) de la surface d'appui (10), d'une première dimension de débord (M) en direction du sol (26) et, dans une deuxième position de montage, avec sa forme sur une partie environnante (10a) de la surface d'appui (10), d'une deuxième dimension de débord (M) en direction du sol (26), la deuxième dimension de débord (M) étant inférieure à la première dimension de débord (M) et pouvant également correspondre à la valeur 0.

2. Dispositif de récolte (2) selon la revendication 1, **caractérisé en ce que** l'insert interchangeable (30) est formé au moins dans la zone de débord (M) comme un corps en forme de plaque.

3. Dispositif de récolte (2) selon la revendication 1 ou 2, **caractérisé en ce que** la surface d'appui (10) de la plaque de glissement (8) comporte une ouverture de passage (34), à travers laquelle l'insert interchangeable (30) passe dans au moins une position de montage.

4. Dispositif de récolte (2) selon l'une des revendications précédentes, **caractérisé en ce que** les moyens de fixation, par lesquels l'insert interchangeable (30) est relié au diviseur d'épis (4) associé, sont disposés sur le côté opposé au sol (26) de la plaque de glissement (8).

5. Dispositif de récolte (2) selon l'une des revendications précédentes, **caractérisé en ce que** la surface d'appui (10) de la plaque de glissement (8) est formée, dans sa partie avant (10a) vers la pointe avant (36) de la pointe de diviseur (6), de manière à s'étendre selon un angle d'attaque vers le haut par rapport à la zone arrière.

6. Dispositif de récolte (2) selon la revendication 5, **caractérisé en ce que**, dans au moins une position de montage dans la zone de débord (M), la pointe inférieure et la pointe avant de l'insert interchangeable (30) descendent jusque dans le plan de la zone arrière de la surface d'appui (10) de la plaque de glissement (8).

7. Dispositif de récolte (2) selon l'une des revendications 5 ou 6, **caractérisé en ce que**, dans au moins une position de montage, la pointe inférieure et la pointe avant de l'insert interchangeable (30) dans la zone de débord (M) descendent jusque dans une zone située en amont de la pointe de diviseur (6).

8. Dispositif de récolte (2) selon l'une des revendications précédentes, **caractérisé en ce que** la pointe de diviseur (6) est configurée comme un composant séparé du reste du diviseur d'épis (4) formé comme patin d'usure (28) et l'insert interchangeable (30) est maintenu dans le patin d'usure (28) dans les positions de montage.
